(19) **Europäisches Patentamt**
**European Patent Office**
**Office européen des brevets**

(11) **EP 3 358 881 B1**

(12) **EUROPEAN PATENT SPECIFICATION**

(45) Date of publication and mention
of the grant of the patent:
**14.07.2021 Bulletin 2021/28**

(51) Int Cl.:
***H04W 36/00*** *(2009.01)*     *H04W 24/10* *(2009.01)*

(21) Application number: **17154144.4**

(22) Date of filing: **01.02.2017**

(54) **METHOD FOR PRIORITISATION OF INTRA-RAT AND INTER-RAT NEIGHBOUR MEASUREMENTS**

VERFAHREN ZUR PRIORISIERUNG VON INTRA-RAT UND INTER-RAT-NACHBARMESSUNGEN

PROCÉDÉ DE PRIORISATION DE MESURES VOISINES INTRA-RAT ET INTER-RAT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.08.2018 Bulletin 2018/32**

(73) Proprietor: **Telefónica Germany GmbH & Co. OHG 80992 München (DE)**

(72) Inventors:
• **Davidovic, Sa a**
  **81373 München (DE)**
• **Müllner, Robert**
  **81479 München (DE)**

• **Leth-Espensen, Mads**
  **82110 Germering (DE)**
• **Seitz, Alexander**
  **81247 München (DE)**

(74) Representative: **Herrmann, Uwe Lorenz Seidler Gossel Rechtsanwälte Patentanwälte Partnerschaft mbB Widenmayerstraße 23 80538 München (DE)**

(56) References cited:
**US-A1- 2009 042 601**    **US-A1- 2009 047 958**
**US-A1- 2012 264 449**    **US-A1- 2014 140 239**
**US-A1- 2015 215 830**    **US-A1- 2017 006 510**

**Description**

The presented invention relates to the field of mobile telecommunication systems, and more particularly to a method, system, network device and user equipment for measurement of neighbouring cells.

3rd Generation Partnership Project (3GPP) mobile telecommunication networks use the handover procedure as one of the methods to transfer an ongoing connection with one User Equipment (UE) from a serving cell to a neighbouring cell to provide service continuity for a moving subscriber. The selection of the handover target cell from the list of defined neighbouring cells is typically based on the UE supported intra Radio Access Technology (intra-RAT) and inter-RAT measurements of the received strength and quality of signals from neighbouring cells. Thanks to this the network can select the most appropriate handover target cell by taking into account the signal strength and/or quality of the neighbouring cells reported by the UE. As a result, the handovers to neighbouring cells which do not fulfil the minimum signal strength/quality criteria are avoided, which in general improves the handover success rate.

In order to inform a UE about the neighbouring cells to be measured and reported, the network sends a set of measurement configurations. Amongst others, these typically contain the information about the RAT, frequencies and physical identifiers of the neighbouring cells, such as the Base Station Identity Code (BSIC) for the Global System for Mobile Communications (GSM), Scrambling Code (SC) for the Universal Mobile Telecommunications System (UMTS), or the Physical Cell Identity (PCI) for 3GPP Long Term Evolution (LTE). Moreover, a measurement configuration can also contain the conditions, typically in the form of signal level and/or quality, a neighbour cell must fulfil before a UE can include it in the measurement report. Upon reception of the measurement configuration, the UE starts performing measurements on signalled RATs and frequencies and sending measurement reports to the network containing information about detected neighbour cells, as defined in the relevant 3GPP specification documents.

Cells in 3GPP mobile telecommunication networks typically have multiple neighbours in different RATs using different frequencies. Generally, for each frequency-RAT combination there is a distinct set of parameters in the measurement configuration. Once a UE receives a measurement configuration set from the network, it has to perform neighbour cell measurements on each frequency-RAT combination signalled in the measurement configuration message. Due to the nature of the measurement process, which includes frequency tuning to a specified frequency, signal sampling and processing of sampled data, as well as typical receiver implementations in UEs, where multiple frequency-RAT combinations are processed in sequence and not in parallel, this measurement procedure can take some time in case that several frequency-RAT measurement configurations are signalled. As a result, the time between the moment a neighbouring cell fulfils the handover criteria and the moment the UE detects it and sends a measurement report can in some situations be too long. This can lead to a degradation of the connection performance or even to a connection drop. This aspect is critical especially for fast moving subscribers at the cell border. An important issue is that fast changing radio channel conditions can hardly be predicted as the situation in real networks often deviates from that modelled by radio network planning tools. Hence identifying the best suited target cell for handover is a key issue for improving the performance of cellular networks.

Furthermore, the 3GPP specifications generally do not provide means to instruct a UE in which order to process the signalled frequency-RAT combinations nor specify the time how long it can/must scan and process one frequency-RAT combination before it moves to the next one.

For example, the LTE technical specification (3GPP TS 36.331 V12.8.0 (2015-12), section 5.5.3.1, http://www.3gpp.org/) defines only a procedure which needs to be performed "for each *measId* included in the *measIdList* within *VarMeasConfig* ", however, the order of processing of defined *measIds* is not defined. Furthermore, the LTE technical specification (3GPP TS 36.133 V12.8.0 (2015-07), chapter 8, http://www.3gpp.org/) defines the time period within the UE has to identify and report a detectable neighbouring cell. Yet, it is not defined how the UE can or should split the available measuring and reporting time between different *measIds* or neighbours within one *measId.* As a result, network operators have a very limited possibility to prioritise some neighbours and/or frequency-RAT combinations over others and thus limited control over processes such as neighbour cell measurement speed, definition of preferred target frequencies/neighbours for handovers, traffic distribution between frequency and RAT layers, etc.

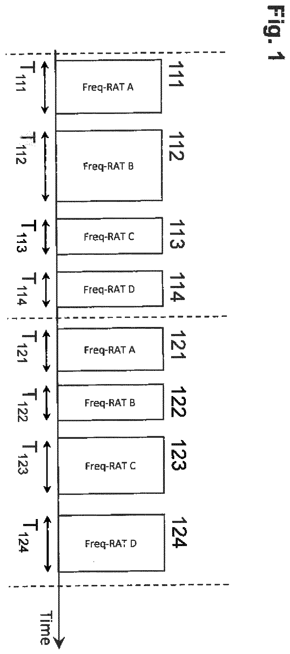

One possible implementation based on the 3GPP LTE specifications is presented in Figure 1. In this example, the network configures four frequency-RAT combinations (A, B, C, and D) and signals them to a UE. Once the UE has received the measurement configuration it starts the measurement processing. In the presented example, 111 indicates the processing of the first frequency-RAT combination A during the processing time $T_{111}$, 112 indicates the processing of the second frequency-RAT combination B during the processing time $T_{112}$, 113 indicates the processing of the third frequency-RAT combination C during the processing time $T_{113}$, and 114 indicates the processing of the fourth frequency-RAT combination D during the processing time $T_{114}$. After all the frequency-RAT combinations A, B, C, and D are processed the procedure is typically repeated from the beginning in a new measurement processing cycle, indicated by 121-124. The order of processing of the frequency-RAT combinations A-D can be freely chosen by the UE. Moreover, the processing time of neighbour detection on a specific frequency-RAT combination ($T_{111}$ - $T_{114}$ and $T_{121}$ - $T_{124}$) is also freely chosen by the UE as long as the time requirements from 3GPP TS 36.133 are fulfilled.

Another example for prioritisation of cells to be measures by UE is provided by US2009/047958 which suggests defining the priority at the UE. Ue maintains a high-priority and low-priority neighbor cell list. UE performs measurements on different measurement times, defined per list.

US2017006510 discloses that the UE receives measurement configuration information of neighbouring cells in priority order. High priority cells are measured during measurement gaps while low priority cells are measured at times other than measurement gaps.

US2009042601 discloses that neighbour cells are ranked based on priority. UE performs measurements according to priority list. Measurement gaps are assigned by the network and UE is measuring during these measurement gaps.

US2015215830 discloses that new field(s) are included in the measurement configuration indicating the measurement interval as well as the time period, relevant for DRX cycles.

The object of the present invention is thus to provide a solution which allows a sufficient configuration of the measurement order without modifying the standardized procedures for neighbour cell measurements.

The object of the present invention is achieved by a method according to the features as defined in claim 1. Preferable aspects of the inventive method are subject matter of the dependent claims.

The present invention is based on the basic prerequisite that measurements of neighbouring cells in a cellular mobile telecommunication network are performed by at least one user equipment, such as a mobile receiver adapted to communicate with the network on the basis of a cellular mobile communication standard, e.g. 2G, 3G, 4G or 5G of the 3GPP standard or any modification thereof.

Further, the network defines a measurement configuration including a list of neighbouring cells to be measured by a user equipment (UE). The measurement configuration is sent, in particular regularly sent, to the user equipment in preparation of a cell handover. According to the invention the user equipment performs the measurement of the neighbouring cells included in the received measurement configuration based on a measurement processing priority defined for at least one neighbouring cell and at least a group of neighbouring cells. A group of neighbouring cells is defined by a certain combination of the cell frequency and the supported cell radio access technology.

The inventive idea introduces a priorisation of neighbouring cells or groups of neighbouring cells for target cell measurements which are executed in state-of-the-art technologies. This is achieved by the new parameter measurement processing priority which is applied in these prior art solutions, for instance the measIdList with-

in VarMeasConfig according to the LTE technical specification (3GPP TS 36.331 V12.8.0 (2015-12), section 5.5.3.1, http://www.3gpp.org/) or any other measurement configuration as defined in the UMTS and GSM standard. In general, with this inventory step it becomes possible to adequately configure intra- and inter-RAT measurements for particular situations according to the environmental conditions in cellular mobile communication networks that vary in time and location. By introduction of the parameter the order of priority in which the neighbouring cells/groups of neighbouring cells are measured at the user equipment can be freely defined and preferable dynamically changed during operation of the network.

In a preferably aspect of the invention the user equipment performs the measurement for each neighbouring cell in a certain order according to their defined measurement processing priority and restarts the measurement of the neighbouring cells from the beginning after completion of the cell list from the measurement configuration.

According to the invention, a time interval, in particular a minimum and/or a maximum time for measurement processing, is individually defined for at least one neighbouring cell and at least one group of neighbouring cells. The time interval defines an admissible range for the total duration of a measurement. For instance, the minimum time for measurement processing defines the minimum time a UE has to spend on processing a specific neighbouring cell and group of neighbouring cells. The measurement processing of this specific neighbouring cell or group of neighbouring cells shall not be shorter than the time specified by the "minimum time for measurement processing" parameter. Further preferable, the maximum time for measurement processing defines the maximum time a UE may spend on searching and measuring a specific neighbouring cell and group of neighbouring cells. The measurement processing of this specific neighbouring cell or group of neighbouring cells shall not be longer than the time specified by the "maximum time for measurement processing" parameter. From the definition it is clear that minimum time for measurement processing is shorter than the maximum time for measurement processing.

The parameters measurement processing priority and/or time interval, e.g. minimum time for measurement processing and maximum time for measurement processing, can be defined according to three different options, namely on a per configured neighbouring cell basis, a per configured group of neighbouring cells basis, or as a combination of these two. In case that a combination of both is used different priorities are possible and configurable for a neighbouring cell and for the group of neighbouring cells to which said neighbouring cell belongs to. Further it is conceivable to provide a sufficient method for determining a precedence priority parameter (neighbouring cell level, group of neighbouring cells level, or none).

According to the first possible option, the parameters measurement processing priority, minimum time for measurement processing and maximum time for measurement processing are defined only on a per configured neighbouring cell basis. In such case the UE performs the measurement processing of the configured neighbouring cells in the order of measurement processing priority, independent of their frequency and radio access technology. The processing time of a single configured neighbouring cell lies in the time interval defined by the lower limit (minimum time for measurement processing) and the upper limit (maximum time for measurement processing) defined for the neighbouring cell.

According to the second possible option the parameters measurement processing priority, minimum time for measurement processing and maximum time for measurement processing are defined only on a per configured group of neighbouring cells basis. In such case the UE shall perform the measurement processing of the group of neighbouring cells in the order of measurement processing priority of the group. Neighbouring cells belonging to the same group shall be processed as if they had the same measurement processing priority. The parameters minimum time for measurement processing and maximum time for measurement processing shall define the processing time of all neighbour cells within one configured group. Alternatively, the parameters minimum time for measurement processing and maximum time for measurement processing define the processing time of one single neighbouring cell configured within one group.

According to the third possible option the parameters measurement processing priority, minimum time for measurement processing and maximum time for measurement processing are defined on a per configured group of neighbouring cells basis. Deviating from the first and second option, the parameter measurement processing priority shall be additionally defined on a per configured neighbouring cell basis within one group of neighbouring cells. In this case the UE performs the measurement processing of different groups of neighbouring cells in the order of the measurement processing priority defined for each group. Neighbouring cells belonging to the same group shall be processed in the order of the per neighbour cell defined measurement processing priority. The parameters minimum time for measurement processing and maximum time for measurement processing may either define the processing time of all neighbour cells within one group. Alternatively, the parameters minimum time for measurement processing and maximum time for measurement processing may define the processing time of one single neighbouring cell configured within one group of neighbouring cells.

If two or more neighbouring cells and/or groups of neighbouring cells have the same priority, a method shall be used to decide in which order to process them. According to one option of the invention the UE may randomly select the processing order of these neighbouring cells or groups. Alternatively, the method may use the order of sequence these neighbouring cells and/or groups of neighbouring cells with identical priorities are signaled to the UE by the network.

Preferable, the defined parameters measurement processing priority and/or time interval, in particular the minimum and/or maximum time for measurement processing, are configured/configurable at the network side and sent to the user equipment. A transmission of the parameters is possible via broadcast message and/or dedicated signaling message. It would also be possible to directly include these parameters into the measurement configuration which is sent to the UE.

A group of neighbouring cells may be advantageously defined by a certain combination of their used cell frequency and the cell radio access technology supported by the cell. The neighbouring cells within one group have the same frequency and/or support the same radio access technology.

The measurement processing priority and/or the time interval, in particular the minimum time for measurement processing and/or the maximum time for measurement processing, are preferably configured dependent on at least one of the following conditions: The active service type of the user equipment and/or the current location of the user equipment and/or the current mobility of the user equipment and/or the current moving direction of the user equipment and/or the signal strength and quality measured by the user equipment for the currently serving cell and/or a user specific traffic profile and/or network performance indicators in the serving cell and/or neighbouring cell and/or the whole area where the user equipment is located.

Differentiation of service types shall preferentially be done via their Quality of Service (QoS) attributes, i.e. Traffic Class and Traffic Handling Priority for GSM and UMTS [3GPP TS 23.107 V11.0.0, "Quality of Service (QoS) concept and architecture", 2012, http://www.3gpp.org] and via its QoS Class Identifier (QCI) for LTE [3GPP TS 23.203 V12.3.0, "Technical Specification Group Services and System Aspects; Policy and charging control architecture", 2013, http://www.3gpp.org].

According to a further preferred aspect of the invention the QoS attribute Guaranteed Bit-Rate (GBR) or a combination with the attributes Traffic Class or QCI shall be used to differentiate between service types for the def-inition of measurement processing priority, a minimum individual measurement processing time and/or a maximum individual measurement processing time.

Information about the current location of a UE may be provided by way of Global Positioning System (GPS) measurements or any similar technology based on signal propagation times from several satellites as well as from evaluation of the radio propagation conditions, i.e. signal strength and signal quality measurements in the serving cell. Preferentially a long minimum individual measurement processing time and long maximum individual measurement processing time shall be defined for UEs that are sufficiently far away from the predicted cell border and the measurement processing priority shall be defined such that the measurements in the radio access technology that generally provides the best performance are done first. For instance, measurements for neighboring cells serving the upcoming fifth generation (5G) should be performed before measurement for cells supporting the LTE/LTE-Advanced (LTE-A), UMTS and GSM standard. In particular network areas this sequence might be different due to traffic load, propagation or inter-connection aspects.

Furthermore, a short minimum individual measurement processing time and a short maximum individual measurement processing time shall be defined for UEs of low signal strength and quality of the serving cell. This setting avoids call drops in poor radio conditions in which a fast handover to any better suited cell is beneficial.

The configuration of the measurement processing priority and/or the time interval, in particular the minimum and/or maximum time for measurement processing, can be static or dynamic. In case a dynamic configuration is selected the change of the above parameters may be triggered by a change of at least one of the conditions as mentioned before. The dynamic change of the parameter values may be triggered at any time, even during an ongoing connection.

The proposed method can also be extended to a case where a UE has multiple receivers used to perform measurements of several neighbour cells in parallel. Under such circumstances the list of neighbouring cells included in the measurement configuration is subdivided into at least two subsets of neighbouring cells and/or groups of neighbouring cells. These subsets may be simultaneously processed by the multiple receivers of the UE. In particular, each measurement unit (receiver of the UE) can be assigned a number of frequency-RAT combinations, which is a subset of the complete set of frequency-RAT configurations defined in the serving cell. The subdivision into subsets and the following assignment to a specific receiver of the UE shall preferably be done by the network, thus it can be controlled by the operator. Alternatively, the method also allows the UE itself to assign the subset, i.e. frequency-RAT combinations, to specific measurement units (receivers). Each measurement unit/receiver will select the neighbouring cell/group of neighbouring cells to be measured next according to their priority as explained above in conjunction with the inventive method. The selection and measurement is carried out on each subset of frequency-RAT combinations within each measurement unit independently.

Furthermore, if a neighbouring cell and/or group of neighbouring cells does not have one or more of the parameters measurement processing priority and/or time interval, in particular minimum time for measurement processing and/or maximum time for measurement processing defined or one or more of these values are invalid, a default value for the parameter which is not configured could be used. Alternatively, the respective parameter or even the neighbouring cell/group of neighbouring cells could be completely ignored at the user equipment, i.e. the cell or group of cells is not measured at the UE.

Transmission of a measurement report from the UE to the network is generally independent of the measurement process. This means that a measurement report can be sent as soon as the conditions necessary for its transmission are fulfilled, for instance as defined in the relevant 3GPP specification documents. This can happen even before the time interval has been exceeded, in particular the minimum time for measurement processing has expired. According to one aspect of the invention, after the measurement report has been transmitted to the network the UE shall still continue and complete at least an ongoing measurement of a neighbour cell and/or a group of neighbouring cells at least until the minimum time for measurement processing has expired. According to another aspect of the invention, after the measurement report has been transmitted the UE may stop an ongoing measurement for at least one neighbouring cell and/or a group of neighbouring cells, for which the minimum time for measurement processing has yet not been expired, and to move to the next neighbouring cell and/or group of neighbouring cells in the order of the priority. A decision to move to the next neighbouring cell and/or group of neighbouring cells after the measurement report has been sent can be based on different conditions and inputs. For instance the signal level and/or quality of the reported neighbour cell is higher than a pre-defined threshold, the number of detected and reported neighbour cells of one group of neighbouring cells during the time interval is higher than a pre-defined threshold, or any combination of these or any other conditions and inputs.

The object of the present invention is also solved by a mobile cellular communication network configured to execute the method steps according to the present invention. The properties and advantages of the network obviously correspond to the above discussion in regard to the inventive method. The present invention is also directed to a base station as well as a user equipment capable of processing the inventive method steps according to the present invention. A possible user equipment is for instance a mobile phone, smartphone, laptop, PC, Tabled, Wearable, etc..

The inventive procedure of modifications of the measurement configuration, according to the invention, is explained in more details in the sequel. The figures show:

Figure 1:     a time diagram displaying the chronology of the cell measurements according to a conventional prior art procedure,

Figure 2:     a time diagram displaying the chronology of cell measurements according to a first embodiment of the invention,

Figure 3: another time diagram displaying the chronology of cell measurements according to a further embodiment of the invention and

Figure 4: a block diagram showing the implementation of the inventive algorithm.

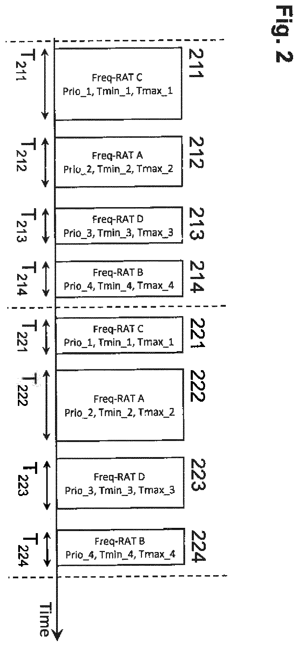

One of the presented embodiments of the invention is illustrated in Figure 2. In this example, the network configures four frequency-RAT combinations (A, B, C, and D) and signals them to a UE. For each frequency-RAT combination, the network signals the *"measurement processing priority"*, defined by the parameter *Prio_x* (x=1...4), as well as *"minimum time for measurement processing"* and *"maximum time for measurement processing"*, defined by the parameters *Tmin_x* and *Tmax_x,* (x=1...4) respectively. The actual measurement processing time $T_{21x}/T_{22x}$ fulfils the relation

$$Tmin\_x \leq T_{21x}/T_{22x} \leq Tmax\_x.$$

*Prio_x, Tmin_x,* and *Tmax_x* can be set by the network operator independently for each configured frequency-RAT combination. As the parameters *"measurement processing priority"*, *"minimum time for measurement processing"* and *"maximum time for measurement processing"* are only defined per frequency-RAT combination, all the neighbour cells belonging to one specific frequency-RAT combination are processed assuming that they have the same *"measurement processing priority"*. Moreover, the processing time $T_{21x}/T_{22x}$ represents the overall time for processing of all neighbouring cells within this frequency-RAT combination.

Reference sign 211 indicates the processing of the frequency-RAT combination C during processing time $T_{211}$. The processing priority of the frequency-RAT combination C is defined by the parameter *Prio_1.* The parameters *Tmin_1* and *Tmax_1* define the processing window of the frequency-RAT combination C, where $Tmin\_1 \leq T_{211} \leq Tmax\_1.$

Reference sign 212 indicates the processing of the frequency-RAT combination A during processing time $T_{212}$. The processing priority of the frequency-RAT combination A is defined by the parameter Prio_2. The parameters *Tmin_2* and *Tmax_2* define the processing window of the frequency-RAT combination A where $Tmin\_2 \leq T_{212} \leq Tmax\_2.$

Reference sign 213 indicates the processing of the frequency-RAT combination D during the processing time $T_{213}$. The processing priority of the frequency-RAT combination D is defined by the parameter *Prio_3.* The parameters *Tmin_3* and *Tmax_3* define the processing window of the frequency-RAT combination D, where $Tmin\_3 \leq T_{213} \leq Tmax\_3.$

Reference sign 214 indicates the processing of the frequency-RAT combination B during processing time $T_{214}$. The processing priority of the frequency-RAT combination B is defined by the parameter *Prio_4*. The parameters *Tmin_4* and *Tmax_4* define the processing window of the frequency-RAT combination B, where $Tmin\_4 \leq T_{214} \leq Tmax\_4.$

In the presented case, the order of the priority is *Prio_1 > Prio_2 > Prio_3 > Prio_4,* such that the frequency-RAT combination C is processed first, the frequency-RAT combination A is processed second, the frequency-RAT combination D is processed third, and the frequency-RAT combination B is processed fourth. After all four frequency-RAT combinations are processed the procedure is repeated, as indicated by 221, 222, 223, and 224. The processing times in the second cycle ($T_{22x}$) can be generally different than in the first cycle, i.e. $T_{21x} \neq T_{22x}.$

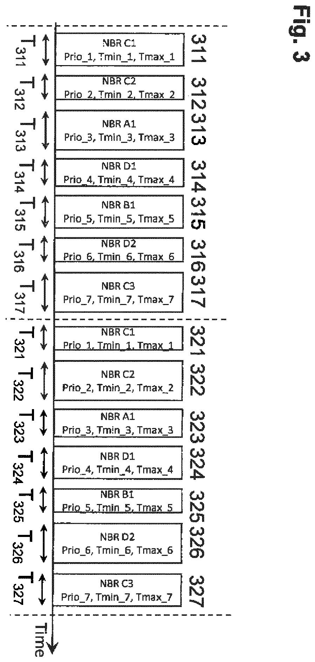

Another presented embodiment of the invention is illustrated in Figure 3. In this example, the network configures seven neighbouring cells (A1, B1, C1-C3, D1-D2) on four frequency-RAT combinations (A, B, C and D). Neighbouring cell A1 belongs to frequency-RAT combination A. Neighbouring cell B1 belongs to frequency-RAT combination B. Neighbouring cells C1-C3 belong to frequency-RAT combination C. Neighbouring cells D1 and D2 belong to frequency-RAT combination D. The parameters *"measurement processing priority"* (*Prio_x, x*=1... 7)*, "minimum time for measurement processing" (Tmin_x, x*=1...7) and *"maximum time for measurement processing"* (*Tmax_x, x*=1...7) are defined only per each configured neighbouring (NBR) cell, where x=1 corresponds to NBR C1, x=2 corresponds to NBR C2, x=3 corresponds to NBR A1, x=4 corresponds to NBR D1, x=5 corresponds to NBR B1, x=6 corresponds to NBR D2, and x=7 corresponds to NBR C3. Furthermore, *Prio_1 > Prio_2 > Prio_3 > Prio_4 > Prio_5 > Prio_6 > Prio_7.*

Thus the neighbour cells are processed in the following order: C1, C2, A1, D1, B1, D2, C3. The actual processing time $T_{31x}/T_{32x}$ fulfils the relation $Tmin\_x \leq T_{31x}/T_{32x} \leq Tmax\_x.$ Analogue to Figure 2, the reference signs 31*x* represent the processing of the corresponding neighbour x in the first cycle during the processing time $T_{31x}$. The reference signs 32x represent the processing of the corresponding neighbour x in the following cycle during the processing time $T_{32x}$. In general, the processing time of the second cycle needs not to be equal to the processing time of the subsequent cycle ($T_{31x} \neq T_{32x}$).

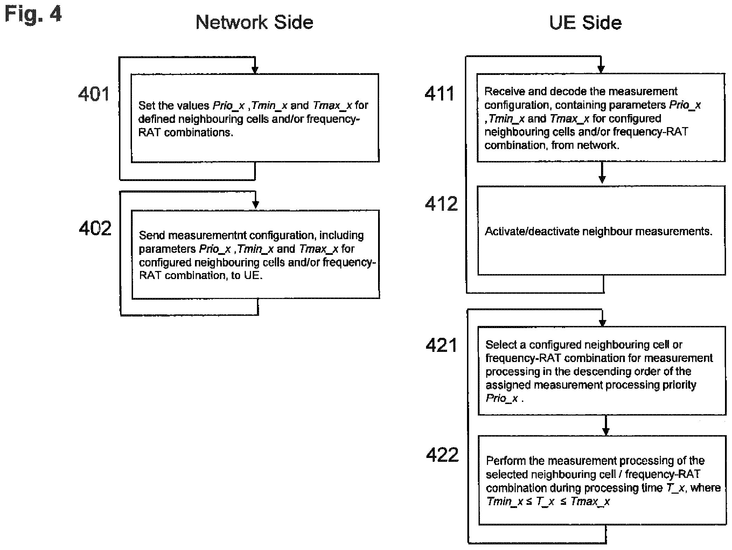

The algorithm used for the neighbour measurement procedure according to the presented invention is illustrated in Figure 4. On the network side, two processes are running. Reference sign 401 indicates the process where the values of the parameters *"measurement processing priority"*, *"minimum time for measurement processing"* and *"maximum time for measurement processing"* are set for neighbouring cells and/or frequency-RAT combinations.

The values of the proposed parameters *"measurement processing priority", "minimum time for measurement processing"* and *"maximum time for measurement processing"* can be set based on different inputs, such as:

    i. Active service type (voice, video call, data, streaming, etc. or any combination of these). Differentiation of these services shall preferentially be done via their Quality of Service (QoS) attributes, i.e. Traffic Class and Traffic Handling Priority for GSM and UMTS [3GPP TS 23.107 V11.0.0, "Quality of Service (QoS) concept and architecture", 2012, http://www.3gpp.org] and via their QoS Class Identifier (QCI) for LTE [3GPP TS 23.203 V12.3.0, "Technical Specification Group Services and System Aspects; Policy and charging control architecture", 2013, http://www.3gpp.org]. In a further embodiment of this invention, the QoS attribute Guaranteed Bit-Rate (GBR) or a combination with the attributes Traffic Class or QCI shall be used to differentiate between service types for the definition of *"measurement processing priority", "minimum time for measurement processing",* and/or *"maximum time for measurement processing".*

    ii. UE location, mobility and direction of movement. Information about the location of the UE is available via Global Positioning System (GPS) measurements or any similar technology based on signal propagation times from several satellites, as well as from evaluation of the radio propagation conditions, i.e. signal strength and signal quality measurements in the serving cell. Preferentially long *"minimum time for measurement processing"* and long *"maximum time for measurement processing"* shall be defined for UEs that are sufficiently far away from the predicted cell border and the *"measurement processing priority"* shall be defined such that the measurements in the RAT that generally provides the best performance are done first. This is typically the upcoming fifth generation (5G) before LTE/LTE-Advanced (LTE-A), UMTS, and GSM. In particular network areas this sequence might be different due to traffic load, propagation or inter-connection aspects.

    iii. Signal strength and quality. Preferentially a short *"minimum time for measurement processing"* and a short *"maximum time for measurement processing"* shall be defined for UEs of low signal strength and quality of the serving cell. This setting avoids call drops in poor radio conditions in which a fast handover to any better suited cell is beneficial.

    iv. Network performance indicators in the serving cell, neighbouring cell or the whole area where the UE is located, or any combination of these.

    v. User specific traffic profile.

    vi. Any combination of the above mentioned or any other inputs.

The values can be set statically or dynamically, and can depend on different inputs, as explained above. In case of dynamic settings, the parameter change can be generally triggered at any time (i.e. even during an ongoing connection) as a result of changes of the above mentioned inputs.

Reference sign 402 indicates the process where the measurement configurations including the parameters *"measurement processing priority", "minimum time for measurement processing"* and *"maximum time for measurement processing"* for configured neighbouring cells and/or frequency-RAT combinations are sent to the UE. Sending of the measurement configuration is triggered by different events, according to the relevant 3GPP documentation.

On the UE side, two processes are running. Reference sign 411 indicates the first step of the first process, where the UE receives and decodes the measurement configuration from the network including the parameters *"measurement processing priority", "minimum time for measurement processing"* and *"maximum time for measurement processing".* In step 412 of the first process the neighbour measurements are activated/deactivated based on the parameters indicated in the measurement configuration and rules defined in the relevant 3GPP specifications. The second process, containing steps 421 and 422, is active only if neighbour measurements are activated. In step 421 the neighbour measurement algorithm selects a configured neighbouring cell or frequency-RAT combination for measurement processing in the descending order of the assigned measurement processing priority *Prio_x*. If all neighbouring cells/frequency-RAT combinations have been processed, a new measurement processing cycle is started from the beginning. In step 422 the UE performs the measurement processing of the selected neighbouring cell/frequency-RAT combination during processing time *T_x,* where $Tmin\_x \leq T\_x \leq Tmax\_x$. After the measurement processing is finished the process returns to step 421.

The benefits of the presented invention are summarized below:

    - It solves multiple problems detected in current multi-RAT networks, such as:

        ◦ Different Packet Switched Handover (PSHO) / Single Radio Voice Call Continuity (SRVCC) thresholds for GSM and UMTS, which leads to different LTE service areas towards GSM and UMTS, as well as smaller LTE footprint in the inter-RAT cell reselection from GSM/UMTS to LTE.

        ◦ Inability to precisely define the preferred target RAT for Circuit Switched Fall-Back (CSFB) in case that both GSM and UMTS neighbours are defined.

        ◦ Inability to influence the order and time of neighbour cell search in case of procedures requiring very fast neighbour measurements (like CSFB call setup, handovers due to fast signal level drop, early SRVCC, etc.).

The presented invention is applicable for all exiting 3GPP technologies, such as GSM, UMTS, LTE, and LTE-A, as well as the upcoming 5G technology. Implementation in the 3GPP standard specification allows reaching all presented benefits.

**Claims**

1. A method for the measurement of neighbouring cells in a cellular mobile telecommunication network wherein the network defines a measurement configuration which includes a list of neighbouring cells to be measured by a user equipment and which is sent to the user equipment in preparation of a cell handover,
   wherein the user equipment performs the measurement of the neighbouring cells included in the measurement configuration based on a measurement processing priority defined by the network side for at least one neighbouring cell and at least one group of neighbouring cells and sent by the network side to the user equipment,
   **characterized in**
   **that** the user equipment performs the measurements for the neighbouring cells included in the measurement configuration in a certain order according to their defined measurement processing priority and that a time interval limited by a minimum and a maximum time for measurement processing is individually defined by the network side for at least one neighbouring cell and at least one group of neighbouring cells and sent to the user equipment wherein the actual measurement duration for the respective neighbouring cell and group of neighbouring cell lies within the time interval as defined for the measured neighbouring cell and group of neighbouring cells.

2. The method according to claim 1 **characterized in that** different priorities are configured/configurable for a neighbouring cell and for the group of neighbouring cells to which the neighbouring cell belongs to.

3. The method according to any of the preceding claims **characterized in that** the defined measurement processing priority and time interval are sent to the user equipment via broadcast message and/or dedicated signaling message and/or with the measurement configuration.

4. The method according to any of the preceding claims **characterized in that** the user equipment restarts the measurement of the neighbouring cells from the beginning after completion of the cell list included in the measurement configuration.

5. The method according to any of the preceding claims **characterized in that** in case two or more neighbouring cells and/or groups of neighbouring cells have the same priority the processing order of these cells and/or groups can be randomly selected by the UE or is defined by the sequence they have been signaled to the UE by the network.

6. The method according to any of the preceding claims **characterized in that** neighbouring cells within the group of neighbouring cells have the same cell frequency and the same supported cell radio access technology.

7. The method according to any of the preceding claims **characterized in that** the measurement processing priority and/or minimum and/or maximum time for measurement processing are configured dependent on at least one of the following conditions or a combination thereof: the active service type of the user equipment or the current location of the user equipment or the current mobility of the user equipment or the current moving direction of the user equipment or the signal strength and quality measured by the user equipment for the currently serving cell or a user specific traffic profile or network performance indicators in the serving cell and/or neighbouring cell.

8. The method according to claim 7 **characterized in that** the configuration of the measurement processing priority and/or minimum and/or maximum time for measurement processing are static or dynamic wherein in case of a dynamic configuration the change of the parameter values may be triggered by a change of the conditions according to claim 7 at any time even during an ongoing connection.

9. The method according to any of the preceding claims **characterized in that** the list of neighbouring cells of the measurement configuration is subdivided into at least two subsets of neighbouring cells and/or groups of neighbouring cells which can be separately and simultaneously processed by different receivers of a user equipment including multiple receivers.

10. The method according to any of the preceding claims **characterized in that** in case the measurement processing priority and/or the time interval for measurement processing are not configured for a neighbouring cell and/or a group of neighbouring cells or the value of any of these parameters is invalid, a default value is used for the missing parameter or the neighbouring cell/group of neighbouring cell is completely ignored at the user equipment.

11. The method according to any of the preceding claims **characterized in that** an ongoing measurement for a neighbouring cell/group of neighbouring cells is completed by the user equipment although the conditions for transmission of a measurement report to the network are met.

12. The method according to any one of the preceding claims 1 to 10 **characterized in that** the user equipment stops an ongoing measurement for a neighbouring cell/group of neighbouring cells if the conditions for transmission of a measurement report to the network are met.

13. A mobile cellular communication network configured to execute the method according to any of the preceding claims 1 to 12.

14. A user equipment comprising means configured to perform a measurement of the neighbouring cells included in a received measurement configuration based on a measurement processing priority defined by the network side for at least one neighbouring cell and at least one group of neighbouring cells and sent by the network side to the user equipment, **characterized in that** the user equipment performs the measurements for the neighbouring cells included in the measurement configuration in a certain order according to their defined measurement processing priority and according to a time interval limited by a minimum and a maximum time for measurement processing is individually defined by the network side for at least one neighbouring cell and at least one group of neighbouring cells and received at the user equipment wherein the actual measurement duration for the respective neighbouring cell and group of neighbouring cell lies within the time interval as defined for the measured neighbouring cell and group of neighbouring cells.

15. The user equipment of claim 14 configured to execute the method according to any of the preceding claims 2 to 12.

**Patentansprüche**

1. Verfahren zur Messung von Nachbarzellen in einem Mobilfunktelekommunikationsnetz, wobei das Netz eine Messkonfiguration bildet, welche eine Liste von Nachbarzellen umfasst, die von einem Endgerät zu messen sind, und welche in Vorbereitung auf eine Zellübergabe an das Endgerät gesendet wird, wobei das Endgerät die Messung der in der Messkonfiguration enthaltenen Nachbarzellen beruhend auf einer Messverarbeitungspriorität vornimmt, die für mindestens eine Nachbarzelle und mindestens eine Gruppe von Nachbarzellen von der Netzseite definiert wird und von der Netzseite an das Endgerät gesendet wird, **gekennzeichnet dadurch, dass** das Endgerät die Messungen der in der Messkonfiguration enthaltenen Nachbarzellen in einer bestimmten Reihenfolge gemäß ihrer definierten Messverarbeitungspriorität vornimmt und dass ein Zeitintervall, das durch eine Mindest- und eine Höchstzeit für die Messverarbeitung beschränkt ist, von der Netzseite für mindestens eine Nachbarzelle und mindestens eine Gruppe von Nachbarzellen einzeln definiert ist und an das Endgerät gesendet wird, wobei die tatsächliche Messdauer für die jeweilige Nachbarzelle und Gruppe von Nachbarzellen innerhalb des für die gemessene Nachbarzelle und Gruppe von Nachbarzellen definierten Zeitintervalls liegt.

2. Verfahren nach Anspruch 1, **dadurch gekennzeichnet, dass** für eine Nachbarzelle und für die Gruppe von Nachbarzellen, zu der die Nachbarzelle gehört, unterschiedliche Prioritäten konfiguriert/konfigurierbar sind.

3. Verfahren nach einem der vorhergehenden Ansprüche, **dadurch gekennzeichnet, dass** die definierte Messverarbeitungspriorität und das Zeitintervall mittels Broadcast-Nachricht und/oder dedizierter Signalisierungsnachricht und/oder mit der Messkonfiguration an das Endgerät gesendet werden.

4. Verfahren nach einem der vorhergehenden Ansprüche, **dadurch gekennzeichnet, dass** das Endgerät die Messung der Nachbarzellen nach Abschluss der in der Messkonfiguration enthaltenen Liste von Zellen von Anfang an neu startet.

5. Verfahren nach einem der vorhergehenden Ansprüche, **dadurch gekennzeichnet, dass**, falls zwei oder mehr Nachbarzellen und/oder Gruppen von Nachbarzellen die gleiche Priorität aufweisen, die Verarbeitungsreihenfolge dieser Zellen und/oder Gruppen von dem Endgerät beliebig gewählt werden kann oder durch die Reihenfolge definiert ist, mit der sie dem Endgerät vom Netz signalisiert wurden.

6. Verfahren nach einem der vorhergehenden Ansprüche, **dadurch gekennzeichnet, dass** Nachbarzellen innerhalb der Gruppe von Nachbarzellen die gleiche Zellenfrequenz und die gleiche unterstützte Funkzellenzugangstechnologie aufweisen.

7. Verfahren nach einem der vorhergehenden Ansprüche, **dadurch gekennzeichnet, dass** die Messverarbeitungspriorität und/oder die Mindest-und/oder Höchstzeit für Messverarbeitung abhängig von mindestens einer der folgenden Bedingungen oder einer Kombination derselben konfiguriert sind: der aktiven Betriebsart des Endgeräts oder dem aktuellen Standort des Endgeräts oder der aktuellen Mobilität des Endgeräts oder der aktuellen Bewegungsrichtung des Endgeräts oder der Signalstärke und -qualität, die von dem Endgerät für die aktuell bedienende Zelle gemessen wird, oder einem nutzerspezifischen Verkehrsprofil oder Netzleistungsindikatoren in der bedienenden Zelle und/oder Nachbarzelle.

8. Verfahren nach Anspruch 7, **dadurch gekennzeichnet, dass** die Konfiguration der Messverarbeitungspriorität und/oder die Mindest- und/oder Höchstzeit für die Messverarbeitung statisch oder dynamisch sind, wobei bei einer dynamischen Konfiguration die Änderung der Parameterwerte durch eine Änderung der Bedingungen nach Anspruch 7 jederzeit, selbst während einer bestehenden Verbindung, ausgelöst werden kann.

9. Verfahren nach einem der vorhergehenden Ansprüche, **dadurch gekennzeichnet, dass** die Liste von Nachbarzellen der Messkonfiguration in mindestens zwei Teilmengen von Nachbarzellen und/oder Gruppen von Nachbarzellen unterteilt ist, die separat und gleichzeitig von verschiedenen Empfängern eines Endgeräts, einschließlich mehrerer Empfänger, verarbeitet werden können.

10. Verfahren nach einem der vorhergehenden Ansprüche, **dadurch gekennzeichnet, dass**, falls die Messverarbeitungspriorität und/oder das Zeitintervall für die Messverarbeitung, für eine Nachbarzelle und/oder eine Gruppe von Nachbarzellen nicht konfiguriert sind oder der Wert eines dieser Parameter ungültig ist, für den fehlenden Parameter ein voreingestellter Wert genutzt wird oder die Nachbarzelle/Gruppe von Nachbarzellen am Endgerät vollständig ignoriert wird.

11. Verfahren nach einem der vorhergehenden Ansprüche, **dadurch gekennzeichnet, dass** eine laufende Messung für eine Nachbarzelle/Gruppe von Nachbarzellen von dem Endgerät abgeschlossen wird, auch wenn die Bedingungen für die Übertragung eines Messberichts an das Netz erfüllt sind.

12. Verfahren nach einem der vorhergehenden Ansprüche 1 bis 10, **dadurch gekennzeichnet, dass** das Endgerät eine laufende Messung für eine Nachbarzelle/Gruppe von Nachbarzellen stoppt, wenn die Bedingungen für die Übertragung eines Messberichts an das Netz erfüllt sind.

13. Mobilfunktelekommunikationsnetz, welches konfiguriert ist, das Verfahren nach einem der vorhergehenden Ansprüche 1 - 12 auszuführen.

14. Endgerät mit Mitteln, welche konfiguriert sind, eine Messung der in einer empfangenen Messkonfiguration enthaltenen Nachbarzellen beruhend auf einer Messverarbeitungspriorität vorzunehmen, die von der Netzseite für mindestens eine Nachbarzelle und mindestens eine Gruppe von Nachbarzellen definiert ist und von der Netzseite zu dem Endgerät gesendet wird, **dadurch gekennzeichnet, dass** das Endgerät die Messungen für die in der Messkonfiguration enthaltenen Nachbarzellen in einer bestimmten Reihenfolge gemäß ihrer definierten Messverarbeitungspriorität vornimmt und gemäß einem Zeitintervall, das durch eine Mindest- und eine Höchstzeit für die Messverarbeitung beschränkt ist, von der Netzseite für mindestens eine Nachbarzelle und mindestens eine Gruppe von Nachbarzellen einzeln definiert ist und an dem Endgerät empfangen wird, wobei die tatsächliche Messdauer für die jeweilige Nachbarzelle und Gruppe von Nachbarzellen innerhalb des für die gemessene Nachbarzelle und Gruppe von Nachbarzellen definierten Zeitintervalls liegt.

15. Endgerät nach Anspruch 14, welches konfiguriert ist, das Verfahren nach einem der vorhergehenden Ansprüche 2 - 12 auszuführen.

**Revendications**

1. Procédé destiné à la mesure de cellules voisines dans un réseau cellulaire de télécommunication mobile, le réseau définissant une configuration de mesure qui comporte une liste de cellules voisines à mesurer par un équipement utilisateur et qui est envoyée à l'équipement utilisateur en préparation d'un transfert intercellulaire,
l'équipement utilisateur effectuant la mesure des cellules voisines incluses dans la configuration de mesure sur la base d'une priorité de traitement de la mesure définie par le côté réseau pour au moins une cellule voisine et au moins un groupe de cellules voisines et envoyée par le côté réseau à l'équipement utilisateur,
**caractérisé en ce que**
l'équipement utilisateur effectue les mesures pour les cellules voisines incluses dans la configuration de mesure dans un certain ordre selon leur priorité de traitement de la mesure définie et **en ce qu'**un intervalle de temps limité par un temps minimal et un temps maximal pour le traitement de la mesure est défini individuellement par le côté réseau pour au moins une cellule voisine et au moins un groupe de cellules voisines et envoyé à l'équipement utilisateur, la durée de mesure réelle pour la cellule voisine et le groupe de cellules voisines respectifs étant comprise dans l'intervalle de temps tel que défini pour la cellule voisine et le groupe de cellules voisines mesurés.

**2.** Procédé selon la revendication 1, **caractérisé en ce que** différentes priorités sont configurées/configurables pour une cellule voisine et pour le groupe de cellules voisines auquel appartient la cellule voisine.

**3.** Procédé selon l'une quelconque des revendications précédentes, **caractérisé en ce que** la priorité de traitement de la mesure et l'intervalle de temps définis sont envoyés à l'équipement utilisateur par message à diffusion générale et/ou message de signalisation dédié et/ou avec la configuration de mesure.

**4.** Procédé selon l'une quelconque des revendications précédentes, **caractérisé en ce que** l'équipement utilisateur redémarre la mesure des cellules voisines depuis le début une fois que la liste de cellules incluses dans la configuration de mesure est achevée.

**5.** Procédé selon l'une quelconque des revendications précédentes, **caractérisé en ce que**, dans le cas où deux cellules voisines et/ou groupes de cellules voisines ou plus ont la même priorité, l'ordre de traitement de ces cellules et/ou groupes peut être sélectionné au hasard par l'équipement utilisateur, ou est défini par la séquence selon laquelle ils ont été signalisés à l'équipement utilisateur par le réseau.

**6.** Procédé selon l'une quelconque des revendications précédentes, **caractérisé en ce que** des cellules voisines dans le groupe de cellules voisines présentent la même fréquence de cellule et la même technologie d'accès radio de cellule prise en charge.

**7.** Procédé selon l'une quelconque des revendications précédentes, **caractérisé en ce que** la priorité de traitement de la mesure et/ou le temps minimal et/ou le temps maximal pour le traitement de la mesure sont configurés en fonction d'au moins une des conditions suivantes ou d'une combinaison de celles-ci : le type de service actif de l'équipement utilisateur ou l'emplacement actuel de l'équipement utilisateur ou la mobilité actuelle de l'équipement utilisateur ou la direction de déplacement actuelle de l'équipement utilisateur ou la force et la qualité du signal mesurées par l'équipement utilisateur pour la cellule serveuse actuelle ou un profil de trafic spécifique de l'utilisateur ou des indicateurs de performance de réseau dans la cellule serveuse et/ou la cellule voisine.

**8.** Procédé selon la revendication 7, **caractérisé en ce que** la configuration de la priorité de traitement de la mesure et/ou le temps minimal et/ou le temps maximal pour le traitement de la mesure sont statiques ou dynamiques, dans lequel, dans le cas d'une configuration dynamique, la modification des valeurs de paramètre peut être déclenchée par une modification des conditions selon la revendication 7 à tout moment, même pendant une connexion en cours.

**9.** Procédé selon l'une quelconque des revendications précédentes, **caractérisé en ce que** la liste de cellules voisines de la configuration de mesure est divisée en au moins deux sous-ensembles de cellules voisines et/ou groupes de cellules voisines qui peuvent être traités séparément et simultanément par différents récepteurs d'un équipement utilisateur comportant plusieurs récepteurs.

**10.** Procédé selon l'une quelconque des revendications précédentes, **caractérisé en ce que**, dans le cas où la priorité de traitement de la mesure et/ou l'intervalle de temps pour le traitement de la mesure ne sont pas configurés pour une cellule voisine et/ou un groupe de cellules voisines ou que la valeur de l'un quelconque de ces paramètres est non valide, une valeur par défaut est utilisée pour le paramètre manquant ou la cellule voisine / le groupe de cellules voisines est complètement ignoré(e) sur l'équipement utilisateur.

**11.** Procédé selon l'une quelconque des revendications précédentes, **caractérisé en ce qu'**une mesure en cours pour une cellule voisine / un groupe de cellules voisines est achevée par l'équipement utilisateur bien que les conditions pour la transmission d'un rapport de mesure au réseau soient remplies.

**12.** Procédé selon l'une quelconque des revendications précédentes 1 à 10, **caractérisé en ce que** l'équipement utilisateur arrête une mesure en cours pour une cellule voisine / un groupe de cellules voisines si les conditions pour la transmission d'un rapport de mesure au réseau sont remplies.

**13.** Réseau cellulaire de communication mobile configuré pour exécuter le procédé selon l'une quelconque des revendications précédentes 1 à 12.

**14.** Équipement utilisateur comprenant des moyens configurés pour effectuer une mesure des cellules voisines incluses dans une configuration de mesure reçue sur la base d'une priorité de traitement de la mesure définie par le côté réseau pour au moins une cellule voisine et au moins un groupe de cellules voisines et envoyée par le côté réseau à l'équipement utilisateur, **caractérisé en ce que** l'équipement utilisateur effectue les mesures pour les cellules voisines incluses dans la configuration de mesure dans un certain ordre selon leur priorité de traitement de mesure définie et selon un intervalle de temps limité par un temps minimal et un temps maximal pour le traitement de la mesure défini individuellement par le côté réseau pour au moins une cellule voisine et au moins un groupe de cellules voisines et reçu sur l'équipement utilisateur, la durée de mesure réelle pour la cellule voisine et le groupe de cellules voisines respectifs étant comprise dans l'intervalle de temps tel que défini pour la cellule voisine et le groupe de cellules voisines mesurés.

15. Équipement utilisateur selon la revendication 14, configuré pour exécuter le procédé selon l'une quelconque des revendications précédentes 2 à 12.

**Fig. 1**

111    112    113   114    121    122    123    124

Freq-RAT A    Freq-RAT B    Freq-RAT C    Freq-RAT D    Freq-RAT A    Freq-RAT B    Freq-RAT C    Freq-RAT D

$T_{111}$    $T_{112}$    $T_{113}$   $T_{114}$    $T_{121}$    $T_{122}$    $T_{123}$    $T_{124}$

Time

Fig. 2

**Fig. 3**

| | | |
|---|---|---|
| $T_{311}$ ↕ | NBR C1<br>Prio_1, Tmin_1, Tmax_1 | 311 |
| $T_{312}$ ↕ | NBR C2<br>Prio_2, Tmin_2, Tmax_2 | 312 |
| $T_{313}$ ↕ | NBR A1<br>Prio_3, Tmin_3, Tmax_3 | 313 |
| $T_{314}$ ↕ | NBR D1<br>Prio_4, Tmin_4, Tmax_4 | 314 |
| $T_{315}$ ↕ | NBR B1<br>Prio_5, Tmin_5, Tmax_5 | 315 |
| $T_{316}$ ↕ | NBR D2<br>Prio_6, Tmin_6, Tmax_6 | 316 |
| $T_{317}$ ↕ | NBR C3<br>Prio_7, Tmin_7, Tmax_7 | 317 |
| $T_{321}$ ↕ | NBR C1<br>Prio_1, Tmin_1, Tmax_1 | 321 |
| $T_{322}$ ↕ | NBR C2<br>Prio_2, Tmin_2, Tmax_2 | 322 |
| $T_{323}$ ↕ | NBR A1<br>Prio_3, Tmin_3, Tmax_3 | 323 |
| $T_{324}$ ↕ | NBR D1<br>Prio_4, Tmin_4, Tmax_4 | 324 |
| $T_{325}$ ↕ | NBR B1<br>Prio_5, Tmin_5, Tmax_5 | 325 |
| $T_{326}$ ↕ | NBR D2<br>Prio_6, Tmin_6, Tmax_6 | 326 |
| $T_{327}$ ↕ | NBR C3<br>Prio_7, Tmin_7, Tmax_7 | 327 |

Time

## Fig. 4

Network Side

UE Side

401 — Set the values *Prio_x*, *Tmin_x* and *Tmax_x* for defined neighbouring cells and/or frequency-RAT combinations.

402 — Send measurementnt configuration, including parameters *Prio_x*, *Tmin_x* and *Tmax_x* for configured neighbouring cells and/or frequency-RAT combination, to UE.

411 — Receive and decode the measurement configuration, containing parameters *Prio_x*, *Tmin_x* and *Tmax_x* for configured neighbouring cells and/or frequency-RAT combination, from network.

412 — Activate/deactivate neighbour measurements.

421 — Select a configured neighbouring cell or frequency-RAT combination for measurement processing in the descending order of the assigned measurement processing priority *Prio_x*.

422 — Perform the measurement processing of the selected neighbouring cell / frequency-RAT combination during processing time $T\_x$, where $Tmin\_x \le T\_x \le Tmax\_x$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009047958 A
- US 2017006510 A
- US 2009042601 A
- US 2015215830 A

**Non-patent literature cited in the description**

- *3GPP TS 36.331 V12.8.0,* December 2015, http://www.3gpp.org
- 3GPP TS 36.133 V12.8.0. July 2015
- Quality of Service (QoS) concept and architecture. *3GPP TS 23.107 V11.0.0,* 2012, http://www.3gpp.org
- Technical Specification Group Services and System Aspects; Policy and charging control architecture. *3GPP TS 23.203 V12.3.0,* 2013, http://www.3gpp.org